# EUROPEAN PATENT APPLICATION

(11) **EP 3 214 352 A1**
(43) Date of publication of application: **06.09.2017**
(21) Application number: 15855378.4
(22) Date of filing: 14.09.2015
(51) Int. Cl.: F16L 37/12, F16K 27/00, F16L 21/08

(54) **CONNECTION STRUCTURE FOR VALVE AND JOINT IN AIR PIPING**

(30) Priority: 31.10.2014 JP 2014222397
(71) Applicant: Nitta Corporation, Osaka-shi, Osaka 556-0022 (JP)
(72) Inventor: TANIGUCHI, Yasuaki, Nabari-shi Mie 518-0494 (JP)
(74) Representative: Viering, Jentschura & Partner mbB Patent- und Rechtsanwälte
(86) International application number: PCT/JP2015/076033
(87) International publication number: WO 2016/067774

(57) **Abstract**

Provided is a connection mechanism between a valve and a joint is configured to connect a tube through the joint 1 to a housing 2 of the valve in air piping. The housing 2 of the valve includes a connection hole 22 for accommodating and connecting the joint 1. A tubular part 21 configured to attach a front end part of the tube thereto is formed inside the connection hole 22. The joint 1 includes a tube seal 11, a back ring 13 with a lock ring 12 including a claw 121 for preventing disengagement of the tube, a release ring 14, and a tubular cap 15. The joint 1 is configured to be press-inserted into the connection hole of the housing 2.

## Description

### TECHNICAL FIELD

The present invention relates to a connection mechanism between a valve and a joint in air piping, for example, air brake piping for a vehicle, such as a truck.

### BACKGROUND ART

In general, a large truck uses air in order to control and drive a brake and accessories. Therefore, a number of air valves, air tanks, and air actuators are used for the truck. Conventionally, in a joint that connects a tube to a valve, a tapered screw joint is configured to be fastened to the valve (Patent document 1). Taking strength and durability into consideration, the valve and the joint are therefore manufactured using a metal, such as iron, brass, stainless steel, and aluminum.

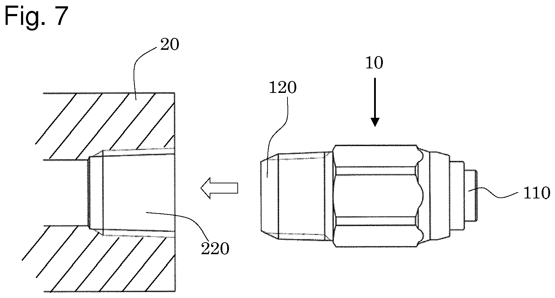

FIG. 7 shows a conventional connection mechanism between a valve and a joint. A housing 20 of a metal valve is provided with a screw hole 220 having a tapered screw on an inner peripheral surface thereof. The connection is made by screwing a male screw part 120 disposed on a metal joint 10 into the screw hole 220.

Meanwhile, there is a desire to manufacture the valve and the joint by using a resin instead of a metal for the purpose of lightweighting and cost saving. However, the resin has lower creep properties than the metal, and it is therefore difficult to retain airtightness over a long term.

### PRIOR ART

### PATENT DOCUMENT

Patent Document 1: Japanese Unexamined Patent Publication No. 2001-280559

### SUMMARY OF THE INVENTION

### PROBLEMS TO BE SOLVED BY THE INVENTION

An object of the present invention is to provide a connection mechanism between a valve and a joint, which is capable of achieving lightweighting and space saving and is free from problems related to deterioration of airtightness and loosening of a connection part with the joint.

### MEANS FOR SOLVING THE PROBLEMS

A connection mechanism between a valve and a joint according to the present invention is the mechanism configured to connect a tube through the joint to a housing of the valve in air piping. The housing of the valve includes a connection hole to accommodate and connect the joint. A tubular part configured to attach a front end part of the tube thereto is disposed inside the connection hole. The joint includes at least a tube seal, a back ring, a release ring, and a tubular cap. The back ring includes a lock ring including a claw for preventing disengagement of the tube being inserted into the connection hole of the housing. The release ring has a front end part being in contact with or close to the lock ring. The tubular cap is configured to be externally inserted onto an outer peripheral surface of the release ring. An outer peripheral surface of the tubular cap is press-contacted with an inner peripheral surface of the connection hole. The joint is configured to be press-inserted into the connection hole of the housing.

Another connection mechanism between a valve and a joint according to the present invention is the mechanism configured to connect a tube through the joint to a housing of the valve in air piping. The housing of the valve includes a connection hole to accommodate and connect the joint. The joint includes at least a casing, an annular tube seal, a back ring, a release ring, and a tubular cap. The casing includes a tubular part whose central part is configured to attach a front end part of the tube thereto, and a shell part configured to come into contact with an inner peripheral surface of the connection hole of the housing. A clearance to insert the tube is formed between the tubular part and the shell part. The annular tube seal is configured to be inserted into the clearance of the casing. The back ring includes a lock ring which is configured to be inserted into the clearance after inserting the tube seal and which includes a claw for preventing disengagement of the tube being inserted into the clearance. A front end part of the release ring is in contact with or close to the lock ring. The tubular cap is configured to be externally inserted onto an outer peripheral surface of the release ring, and an outer peripheral surface of the cap is configured to be press-contacted with an inner peripheral surface of the connection hole. The joint is configured to be press-inserted into the connection hole of the housing.

### EFFECT OF THE INVENTION

According to the present invention, the valve and the joint are connectable without using any screw, and hence there is no likelihood of loosening due to vibration or the like. It is therefore possible to retain airtightness over a long term. Additionally, at least the housing of the valve can be manufactured with a resin, thus leading to lightweighting and cost saving.

Furthermore, space saving is also attainable owing to the structure that the housing of the valve is capable of accommodating the joint itself therein.

### BRIEF DESCRIPTION OF THE DRAWINGS

FIG. 1 is a sectional view that shows a state in which a joint is before being press-inserted in a connection mechanism according to a first embodiment of the present invention;
FIG. 2 is a sectional view that shows a state in which the joint is already press-inserted and a tube is before being attached in the first embodiment;
FIG. 3 is a sectional view that shows a state in which the tube is already attached in the first embodiment;
FIG. 4 is a partially enlarged sectional view that shows a main part in FIG. 2;
FIG. 5 is a plan view of a lock ring;
FIG. 6 is a sectional view that shows a state in which a joint is before being press-inserted in a connection mechanism according to a second embodiment of the present invention; and
FIG. 7 is a sectional view that shows a conventional connection mechanism between a valve and a joint.

### PREFERRED EMBODIMENTS FOR CARRYING OUT THE INVENTION

### <First Embodiment>

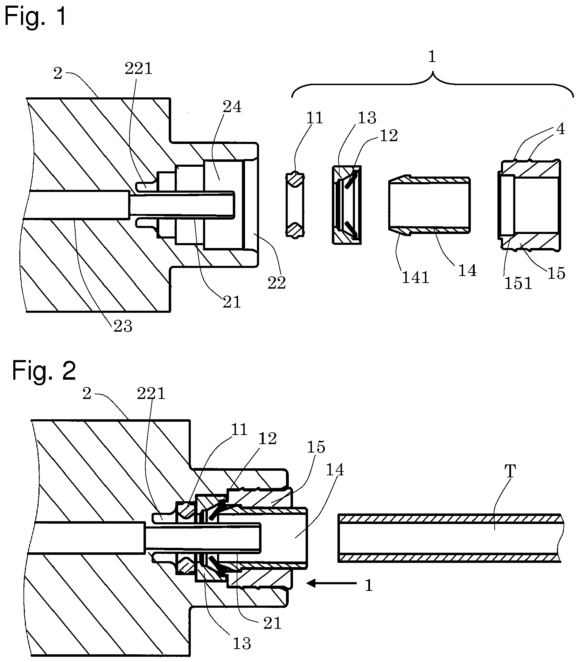

As shown in FIGs. 1 to 3, a connection mechanism between a valve and a joint according to a first embodiment of the present invention is intended to connect a tube T through the joint 1 to a housing 2 of the valve in air piping for a truck or the like.

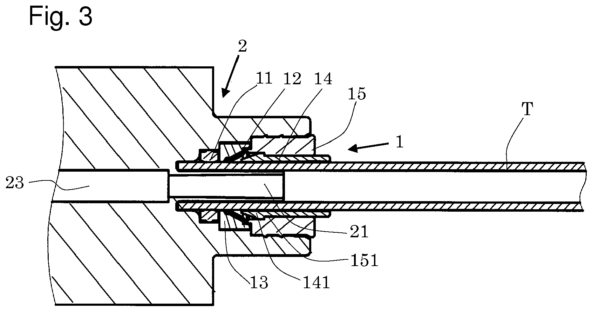

As shown in FIG. 1, the housing 2 of the valve is provided with a connection hole 22 to accommodate and fix the joint 1. The interior of the connection hole 22 serves as a space 24 to accommodate the joint 1 and the tube T therein. The space 24 includes a tubular part 21 which communicates with an air flow channel 23 located inside the housing 2 and protrudes from the air flow channel 23 into the space 24. A front end part of the tube T is configured to be attached to the tubular part 21 as shown in FIGs. 2 and 3.

As shown in FIG. 1, the joint 1 includes a tube seal 11, a back ring 13 with a lock ring 12, a release ring 14, and a tubular cap 15. The joint 1 is configured to be press-inserted into the connection hole 22 of the housing 2. A press-inserted state is shown in FIG. 2.

The tube seal 11 is made of an elastic material, such as rubber, and is configured to ensured airtightness by being press-contacted with an outer peripheral surface of the tube T during the attachment of the tube T as shown in FIG. 3.

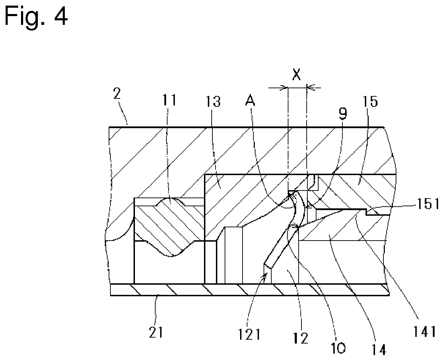

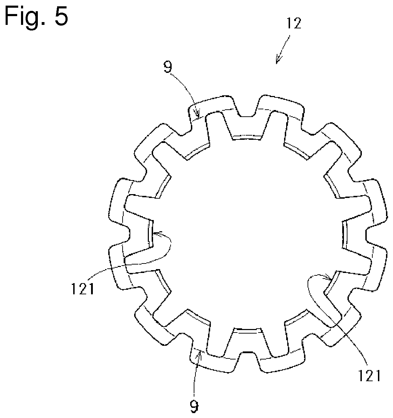

The lock ring 12 is made of metal and has a claw 121 to hold the tube T inside the space 24 of the housing 2 (refer to FIGs. 4 and 5). The lock ring 12 is fixed into the resin back ring 13. The lock ring 12 is made into a zigzag annular member which has bent points 9 and holds the tube T in a tube joint shown in FIGs. 4 and 5.

The claw 121 of the lock ring 12 is disposed so as to be inclined toward a tube insertion direction. Only by inserting the tube T, the claw 121 of the lock ring 12 bites into a surface of the tube T in a locking direction, thereby making it possible to hold the tube T.

Subsequently, the lock ring 12 is forcibly inserted in the insertion direction of the tube and airtightly fixed to the back ring 13. The lock ring 12 comes into contact with a step part of the back ring 13 in the insertion direction of the tube T, resulting in a state in which the lock ring 12 cannot be displaced any more. This leads to such a structure that makes it difficult for the lock ring 12 to be replaced irrespective of a tolerance (error) of a dimension X in the vicinity of the step part A of the back ring 13 (refer to FIG. 4). The lock ring 12 may be airtightly fixed by press-fitting, caulking, or the like.

The release ring 14 is made of a resin, and a front end part thereof in a press-inserted state is in contact with or close to the lock ring 12. The release ring 14 is disposed approachable to or retractable from the tubular cap 15. Therefore, by depressing the release ring 14 in the insertion direction of the tube T, the claw 121 of the lock ring 12 is depressed and retracted backward, thereby making it possible to remove the tube T.

The cap 15 is made of metal and configured to be externally inserted onto an outer peripheral surface of the release ring 14, and the cap 15 is intended to fix the back ring 13 into the connection hole 22 of the housing 2. The cap 15 also has a role in preventing disengagement of the release ring 14 by locking the release ring 14 by a step part 151 formed on an inner peripheral surface of the cap 15. When the cap 15 is press-inserted into the connection hole 22 of the housing 2, the outer peripheral surface of the cap 15 is brought into press-contacted with the inner peripheral surface of the connection hole. Because a plurality of edge-shaped projections 4 are formed on the outer peripheral surface of the cap 15, these projections 4 bite into an inner wall surface of the connection hole 22 and prevent the disengagement of the cap 15.

A method of making the connection between the joint 1 and the housing 2 is described below. Firstly, as shown in FIG. 1, the tube seal 11, the back ring 13 with the lock ring 12, and the release ring 14 are inserted into the connection hole 22 of the housing 2 of the valve, and thereafter the cap 15 is press-inserted and attached thereto (FIG. 2). Specifically, a lubricant, such as grease, is applied to the tube seal 11, and the tube seal is attached to the connection hole 22 of the housing 2. Subsequently, the lock ring 12 is attached to the back ring 13 and then attached to the connection hole 22. Finally, the release ring 14 is passed through the cap 15 and pressed-fitted into the connection hole 22. On this occasion, the release ring 14 is externally fitted into the cap 15 in a state in which the release ring 14 depresses the lock ring 12 in the back ring 13 so as to expand outward the diameter of the claw 121 of the lock ring 12. Consequently, a step part 141 of the release ring 14 and a locking part 151 of the cap 15 are engaged with each other (FIG. 4), so that the joint 1 is fixed to the connection hole 22.

Subsequently, as shown in FIG. 2, the tube T is inserted into a clearance between the claw 121 of the lock ring 12 whose diameter is expanded outward by the release ring 14, and a resin tube 21, and an end part of the tube T is then inserted into a fitting hole 221 at a lower end of the connection hole 22. The tube T is fixed to the resin tube 21 by the tube seal 11 and the claw 121, thereby completing the connection of the tube joint (FIG. 3) .

When removing the tube T, firstly, the diameter of the lock ring 12 is expanded outward by depressing the release ring 14 in the insertion direction of the tube T, and the tube T is then removable.

The above connection form makes it possible to manufacture the housing 2 of the valve by using the resin, thus leading to lightweighting of the valve and the joint as well as space saving.

### <Second Embodiment>

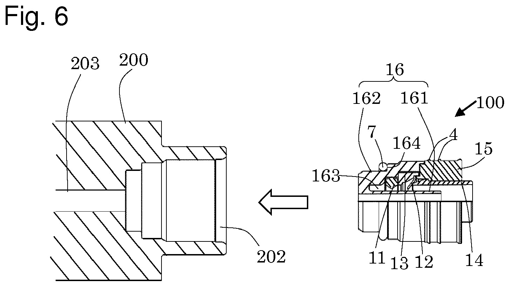

A second embodiment of the present invention is described below with reference to FIG. 6. The same members as those of the first embodiment are identified by the same reference numerals, and their respective descriptions are omitted here.

Although in the first embodiment, assembly is carried out by press-fitting the members of the joint 1 into the connection hole 22 of the housing 2, the second embodiment employs such a way that members of a joint are previously assembled and then press-inserted into a housing 200 of a valve.

Thus, with the second embodiment, an inner wall shape of a connection hole 202 of the housing 200 becomes simpler, and a mold structure for forming the housing 200 also becomes simple accordingly, and a difficulty level of molding accuracy can also be lowered. Furthermore, joints of different sizes are also usable on a tube-by-tube basis.

In the second embodiment shown in FIG. 6, a joint 100 includes an annular casing 16, an annular tube seal 11, a lock ring 12, a back ring 13, a release ring 14, and a cap 15.

The casing 16 includes a tubular part 161 whose central part is configured to attach a front end part of the tube thereto, and a shell part 162 configured to come into contact with an inner wall surface of the connection hole 202 of the housing 200. A clearance 163 to insert the tube is formed between the tubular part and the shell part. The casing 16 can be manufactured with a resin, thus leading to lightweighting. The tubular part 161 and the shell part 162 are connected to each other on a front surface in an insertion direction of the tube, and are formed with integral molding.

A step part 164 is formed on a surface of the shell part 162, and an O-ring 7 is configured to be attached to a front part of the step part 164.

When assembling the joint 100, the tube seal 11, the back ring 13 with the lock ring 12, and the release ring 14 are inserted into the casing 16 from an opening in a rear part in the insertion direction of the tube in the casing 16. Subsequently, the cap 15 is externally inserted onto an outer peripheral surface of the release ring 14. A front surface of the cap 15 comes into contact with a rear surface of the casing 16. An outer peripheral surface of the cap 15, except for the edge-shaped projections 4 disposed on the outer peripheral surface, is configured to be flush with an outer peripheral surface of the casing 16.

When the joint 100 so assembled is connected to the housing 200 of the valve, the joint 100 is press-inserted from a front part of the casing 16 into the connection hole 202 being connected to an air flow channel 203 inside the housing 200. Consequently, the edge-shaped projections 4 formed on the outer peripheral surface of the cap 15 bite into an inner wall of the connection hole 202 of the housing 200, thereby making it possible to connect the joint 100 to the housing 200 of the valve. Subsequently, the tube is inserted into the joint 100 so as to make a connection therebetween.

Here, the O-ring 7 being attached to the outer peripheral surface of the casing 16 is sandwiched between the step part 164 of the casing 16 and a step part disposed on an inner wall surface of the housing 200, and ensures airtightness together with the tube seal 11.

When releasing the connection between the joint 100 and the housing 200 of the valve, the tube T needs to be removed by depressing the release ring 14 in the insertion direction into the housing 200, and then the joint 100 needs to be removed from the connection hole 202 as in the same manner as in the first embodiment.

The housing 2 of the valve and the housing 200 of the valve in the present invention are preferably made of a resin in terms of economy and lightweighting when compared with a tube joint made of metal. It is preferable to use a resin having high heat resistance, such as polyphthalamide (PPA), polyhexamethylene terephthalamide (PA6T), polynonamethylene terephthalamide (PA9T), polydecamethylene terephthalamide (PA10T), polyundecamethylene terephthalamide (PA11T), poly(meta-xylyleneadipamide) (PAMXD6), polyphenylene sulfide (PPS), syndiotactic polystyrene (SPS), polycaproamide (PA6), polyhexamethylene adipamide (PA66), polyundecanamide (PA 11), and polydodecanamide (PA12).

Alternatively, the housing 2 of the valve and the housing 200 of the valve may be made of a metal. Examples of the metal include aluminum, iron, and copper. In this case, the joints 1 and 100 are also attachable with a method, such as caulking, instead of the press fitting.

### INDUSTRIAL APPLICABILITY

With the present invention, there is no likelihood that loosening can occur in the connection part between the valve and the joint due to vibration or the like, and airtightness is retainable over a long term. Hence, the connection mechanisms between the valve and the joint according to the present invention are suitably applicable to the connection between the valve and the joint in the air piping, such as air valves, air tanks, air actuators for use in trucks and other various kinds of machines. Particularly, it is possible to contribute to the lightweighting and cost saving of the trucks or the like by manufacturing at least the housing of the valve by using a resin. Additionally, space saving is also attainable owing to the structure that the housing of the valve is capable of accommodating therein the joint itself.

### Description of the Reference Numeral

- 1, 10, 100: joint
- 2, 20, 200: housing
- 4: projection
- 7: O-ring
- 11: tube seal
- 12: lock ring
- 13: back ring
- 14: release ring
- 15: cap
- 16: casing
- 21: tubular part
- 22, 202: connection hole
- 221: fitting hole
- 121: claw
- 141: step part
- 151: locking part
- T: tube

## Claims

1. A connection mechanism between a valve and a joint configured to connect a tube through the joint to a housing of the valve in the air piping,
wherein the housing of the valve comprises a connection hole configured to accommodate and connect the joint, and a tubular part configured to attach a front end part of the tube thereto is formed inside the connection hole,
wherein the joint comprises at least
a tube seal,
a back ring comprising a lock ring having a claw for preventing disengagement of the tube being inserted into the connection hole of the housing,
a release ring whose front end part is in contact with or close to the lock ring, and
a tubular cap configured to be externally inserted onto an outer peripheral surface of the release ring, wherein an outer peripheral surface of the tubular cap is press-contacted with an inner peripheral surface of the connection hole, and
wherein the joint is configured to be press-inserted into the connection hole of the housing.

2. A connection mechanism between a valve and a joint in air piping configured to connect a tube through the joint to a housing of the valve in the air piping,
wherein the housing of the valve comprises a connection hole configured to accommodate and connect the joint,
wherein the joint comprises at least
a casing comprising a tubular part whose central part is configured to attach a front end part of the tube thereto, and a shell part configured to come into contact with an inner peripheral surface of the connection hole of the housing, wherein a clearance to insert the tube is formed between the tubular part and the shell part,
an annular tube seal being inserted into the clearance of the casing,
a back ring comprising a lock ring which is configured to be inserted into the clearance after inserting the tube seal and which has a claw for preventing disengagement of the tube being inserted into the clearance,
a release ring whose front end part is in contact with or close to the lock ring, and
a tubular cap configured to be externally inserted onto an outer peripheral surface of the release ring, wherein an outer peripheral surface of the tubular cap is press-contacted with an inner peripheral surface of the connection hole,
wherein the joint is configured to be press-inserted into the connection hole of the housing.

3. The connection mechanism according to claim 1 or 2, wherein the housing of the valve is made of a resin.
